# EUROPÄISCHE PATENTSCHRIFT

(11) **EP 0 943 396 B1**
(45) Veröffentlichungstag und Bekanntmachung des Hinweises auf die Patenterteilung: **21.11.2001**
(21) Anmeldenummer: 98118343.7
(22) Anmeldetag: 28.09.1998
(51) Int. Cl.: B23Q 16/08

(54) **Spanneinrichtung zur Fixierung einer mit einem Einzugsnippel versehenen Palette an einer Aufspannplatte**
Device for fixing a pallet with a drawing pin on a mounting plate
Dispositif pour fixer une pallette avec une cheville de connection sur une plate de montage

(30) Priorität: 16.03.1998 DE 29804730 U
(43) Veröffentlichungstag der Anmeldung: 22.09.1999
(73) Patentinhaber: Vischer & Bolli AG, 8600 Dübendorf 1 (CH)
(72) Erfinder: Etter, Ernst, 8800 Thalwil (CH)
(74) Vertreter: Paul, Dieter-Alfred, Dipl.-Ing.

(56) Entgegenhaltungen:
- CH-A- 654 237
- US-A- 4 699 364

## Beschreibung

Die vorliegende Erfindung betrifft eine Spanneinrichtung zur Fixierung einer mit einem Einzugsnippel versehenen Palette an einer Aufspannplatte, mit einem Gehäuse, das eine Auflagefläche für die Palette bildet und eine zur Auflagefläche öffnende Aufnahme aufweist, in der der Einzugsnippel positionierbar und mittels eines Spannmechanismus fixierbar ist, wobei zur drehfesten Positionierung der Palette am Gehäuse an der Auflagefläche wenigstens eine Nut und/oder wenigstens ein Vorsprung für den Eingriff in eine an der Palette ausgebildete Nut vorgesehen ist, dadurch gekennzeichnet, daß die Vorsprünge in Form von Stiften ausgebildet sind, die in die Palette eingeschraubt sind.

Die Bearbeitung von metallischen Werkstücken ist häufig sehr komplex und kann eine Vielzahl von zerspanenden und spanlosen Arbeitsgängen an unterschiedlichen Bearbeitungsmaschinen umfassen, um aus einem Rohling das fertige Bauteil herzustellen. Insbesondere bei automatisierten Fertigungsabläufen ist es dabei wesentlich, daß das Werkstück bei jedem Arbeitsgang eine definierte Lage an der jeweiligen Werkzeugmaschine einnimmt. Zu diesem Zweck ist es in der Praxis üblich, das zu bearbeitende Werkstück zunächst auf eine Palette aufzuspannen und dann die ganze Einheit am Maschinentisch der jeweiligen Werkzeugmaschine festzuspannen. Die Befestigung der Paletten an der Msaschine erfolgt über Einzugsnippel, die an der Rück- bzw. Unterseite der Paletten ausgebildet sind und in Schnellspanneinrichtungen eingesetzt und dort mittels eines Spannmechanismus fixiert werden. In der Massenproduktion kann so die Lage der Schnellspanneinrichtungen als fester Maschinenparameter berücksichtigt werden, so daß es lediglich erforderlich ist, jeweils das Werkstück exakt an der Palette zu positionieren. Das eigentliche Fest- und Umspannen der Einheit aus Werkstück und Palette an den Maschinen kann dann sehr schnell und unproblematisch erfolgen, ohne daß eine weitere Positionierung notwendig ist.

Bei größeren Paletten erfolgt die Fixierung am Maschinentisch in der Regel über mehrere Einzugsbolzen, so daß die Palette auch gegen Verdrehen gesichert ist. Wenn an der Palette jedoch nur ein Einzugsbolzen vorgesehen ist, was insbesondere bei kleinen Paletten der Fall ist, müssen zusätzliche Maßnahmen ergriffen werden, um sicherzustellen, daß die Palette lagerichtig an der Spanneinrichtung positioniert wird. Hierzu ist bei bekannten Spanneinrichtungen der Gehäusedeckel der Spanneinrichtung, auf den die Palette aufgelegt wird, rechteckig oder quadratisch ausgebildet und in der Unterseite der Palette eine Nut ausgebildet, in die der Deckel eingreifen kann. Hierdurch wird zwar eine gewisse Positionierung der Palette erreicht. Nachteilig ist jedoch, daß Nut und Gehäusedeckel über entsprechende Paßflächen verfügen müssen, die teuer in der Herstellung sind, zumal es mit erheblichen Schwierigkeiten verbunden ist, die erforderlichen engen Toleranzen mit der zusätzlichen Passung zwischen Einzugsnippel und Nippelbohrung zu halten. Schließlich wird auch häufig als nachteilig angesehen, daß der Gehäusedeckel eine rechteckige Grundform haben muß. Dies hat nämlich unter anderem zur Folge, daß die Palette nur bedingt in der Spanneinrichtung in unterschiedliche Lagen umgespannt werden kann. Die CH 654 237 offenbart eine Spannvorrichtung, bei der an Gehäuse und Palette zusammenwirkende Planzahnringe vorgesehen sind, die miteinander zur Positionierung der Palette am Gehäuse in Eingriff bringbar sind.

Ein Problem bei den bekannten Spannvorrichtungen besteht allerdings darin, daß die Planzahnringe sehr genau gearbeitet werden müssen, damit eine exakte Verbindung sichergestellt werden kann. Dies ist mit einem entsprechenden Aufwand und Kosten verbunden.

Aufgabe der Erfindung ist es daher, eine Spanneinrichtung der eingangs genannten Art so weiter zu bilden, daß eine lagegenaue Positionierung einer Palette in einfacher Weise erreicht wird.

Diese Aufgabe ist erfindungsgemäß dadurch gelöst, daß die Vorsprünge in Form von Stiften ausgebildet sind, die in die Palette eingeschraubt sind. Durch diese Ausgestaltung können die Stifte in axialer Richtung verstellt und somit optimal und ggf. sogar unter Vorspannung in den Nuten positioniert werden. Somit ist eine hohe Positioniergenauigkeit bei geringen Herstellungskosten ereichbar.

Grundsätzlich ist es ausreichend, wenn am Gehäuse nur eine Nut bzw. ein Zapfen und entsprechend an der Palette nur ein Zapfen bzw. eine Nut vorgesehen ist. In bevorzugter Weise sind an der Auflagefläche jedoch mehrere Nuten und/oder Vorsprünge entlang eines die Aufnahme umgebenden Teilkreises insbesondere gleichmäßig verteilt angeordnet, so daß die Palette in unterschiedlichen Drehlagen an der Spanneinrichtung fixierbar ist. Dabei ist es ausreichend, mehrere Nuten an dem einen Bauteil vorzusehen und nur einen Zapfen an dem anderen Bauteil anzuordnen, der dann entsprechend je nach relativer Drehlage zwischen Palette und Spanneinrichtung in eine der Nuten eingreift. Alternativ kann die Anzahl von Zapfen der Anzahl von Nuten entsprechen, so daß gleichzeitig mehrere Zapfen/Nut-Verbindungen bestehen.

Aus herstellungstechnischen Gründen ist es zweckmäßig, die Nuten in den Randbereichen des Gehäuses bzw. des Gehäusedekkels vorzusehen, da sie dort von der Seite her leicht gefräst werden können.

Hinsichtlich weiterer vorteilhafter Ausgestaltungen der Erfindung wird auf die Unteransprüche sowie die nachfolgende Erläuterung eines Ausführungsbeispieles unter Bezugnahme auf die beiliegende Zeichnung verwiesen. In der Zeichnung zeigt
- Figur 1: im Längsschnitt eine Ausführungsform einer erfindungsgemäßen Spanneinrichtung mit eingesetztem und festgespanntem Einzugsnippel und
- Figur 2: die Spanneinrichtung aus Figur 1 mit eingesetztem, aber nicht festgespanntem Einzugsnippel,
- Figur 3: die Spanneinrichung in Draufsicht,
- Figur 4: eine Palette zur Fixierung an der Spanneinrichtung im Längsschnitt und
- Figur 5: die Palette aus Figur 4 in Draufsicht.

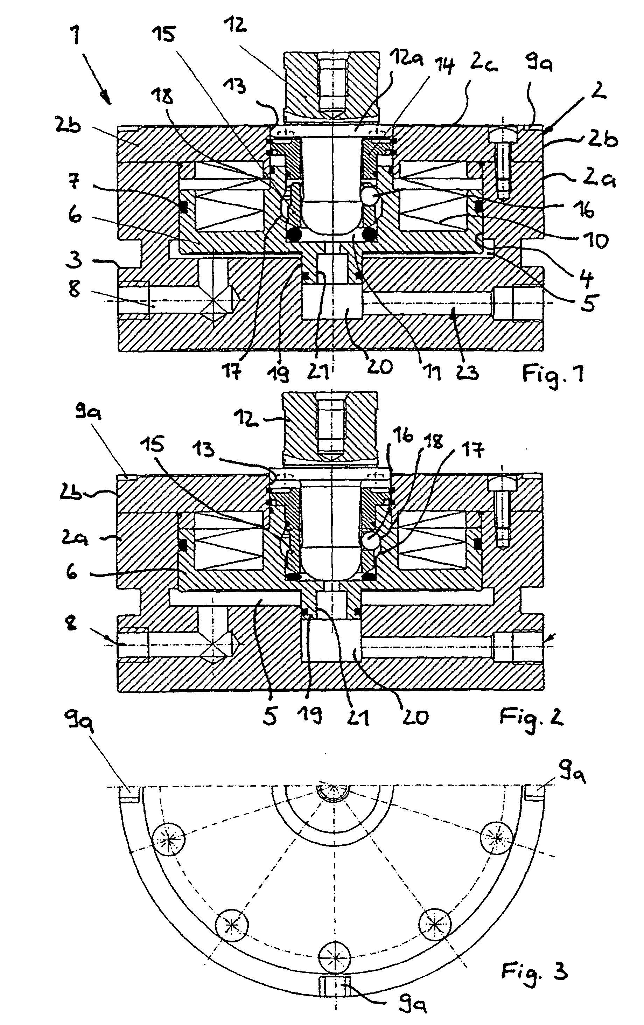

In den Figuren 1 und 2 ist eine Ausführungsform einer erfindungsgemäßen Spanneinrichtung 1 dargestellt. Zu der Spanneinrichtung 1 gehört ein zylindrisches Gehäuse 2 mit einem obenseitig offenen Unterteil 2a, das außenseitig eine Umfangsnut 3 aufweist, in die Spannwerkzeuge zur Fixierung der Spanneinrichtung 1 an einem nicht dargestellten Maschinentisch eingreifen können. In die Zylinderbohrung 4 des Gehäuses 2 ist unter Bildung eines Druckraumes 5 ein Kolben 6 axial bewegbar eingesetzt, wobei der Ringspalt zwischen Zylinderbohrung 4 und Kolben 6 durch einen O-Ring 7 abgedichtet ist. In den Boden der Zylinderbohrung 4 mündet ein im Gehäuse 2 ausgebildeter Kanal 8, durch welchen dem Druckraum 5 ein Hydraulikmittel wie beispielsweise Öl zugeführt werden kann.

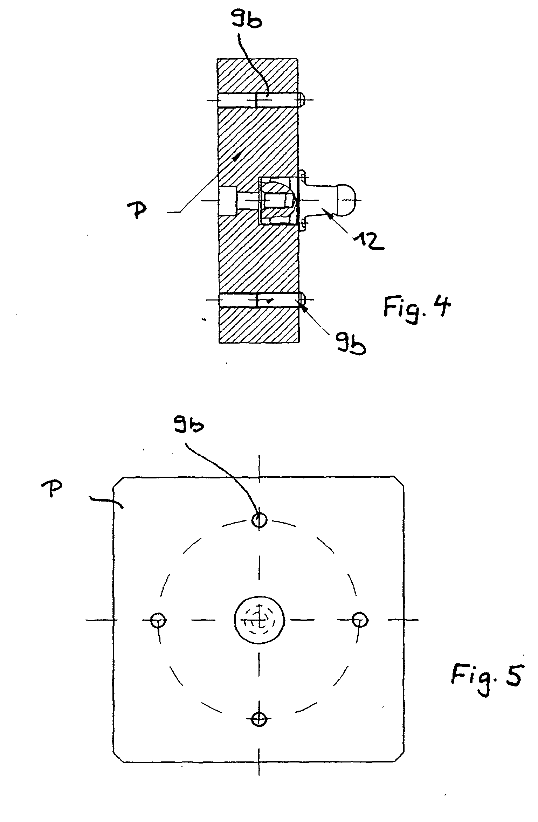

Die offene Oberseite des Gehäuseunterteils 2 ist durch einen Gehäusedeckel 2b verschlossen, der an dem Gehäuseunterteil 2a festgeschraubt ist und an seiner Oberseite eine Auflagefläche 2c für eine zu fixierende Palette P bildet. In der Auflagefläche 2c sind im Bereich des äußeren Deckelrandes vier Nuten 9a vorgesehen, die jeweils mit 90° Versatz gegeneinander angeordnet sind, wie insbesondere in Figur 3 gut erkennbar ist. Die Nuten 9a, welche zu ihrem Boden hin konisch zulaufend ausgebildet sind, dienen zur Positionierung einer Palette P, die an ihrer Unterseite entsprechend vier Zapfen 9b aufweist, die mit den Nuten 9a in Eingriff bringbar sind. Wie in Figur 4 gezeigt ist, sind die Zapfen 9b in Form von Stiften ausgebildet, die jeweils mit 90° Versatz in die Palette P eingeschraubt sind, wobei die Mittelpunkte der Zapfen 9b auf einem den Einzugsnippel 12 umgebenden Teilkreis angeordnet sind.

Zwischen dem Gehäusedeckel 2b und dem Kolben 6 ist ein Tellerfederpaket 10 angeordnet, das den Kolben 6 in Richtung des Bodens der Zylinderbohrung 4 beaufschlagt.

In der dem Druckraum 5 gegenüberliegenden Oberseite des Kolbens 6 ist eine Sackbohrung vorgesehen, die eine Aufnahme 11 für einen Einzugsnippel 12 bildet, der in die Aufnahme 11 durch eine im Gehäusedeckel 2b vorgesehene Durchgangsbohrung 13 eingesetzt werden kann. Zur Erleichterung dieses Einsetzvorganges ist in der Durchgangsbohrung 13 ein hülsenförmiges Führungselement 14 vorgesehen, und zur exakten Positionierung des Einzugsnippels 12 in der Spanneinrichtung 1 ist der obere Bereich der Durchgangsbohrung 13 in Passung zu einem Flansch 12a des Einzugsnippels 12 dimensioniert.

Zur Fixierung der Palette P wird der Einzugsnippel 12 in die Aufnahme 11 eingesetzt und die Palette P so positioniert, daß die Zapfen 9b der Palette P in die Nuten 9a des Gehäusedeckels 2b eingreifen, so daß die Palette P auf der Auflagefläche 2c zum Liegen kommt und ein Verdrehen der Palette P durch den Eingriff der Zapfen 9b in die Nuten 9a verhindert wird. Dabei kann die Palette P entsprechend der Anordnung von Nuten 9a und Zapfen 9b vier um jeweils 90° gegeneinander versetzte relative Drehlagen gegenüber der Spanneinrichtung 1 einnehmen.

Die Arretierung der Palette P erfolgt dann mittels eines Spannmechanismus. Dieser umfaßt in an sich bekannter weise einen in die Aufnahme 11 eingesetzten Kugelkäfig 15, in dem eine Kugel 16 radial verstellbar gehalten ist, die je nach Kolbenstellung in eine Nut 17 in der Wandung der Aufnahme 11 nach außen ausweichen kann, so daß ein Einzugsnippel 12 in den Kugelkäfig 15 eingesetzt oder aus diesem herausgenommen werden kann, oder durch die Wandung der Aufnahme 11 an einem solchen Ausweichen gehindert und damit in Eingriff mit einer entsprechenden Gegenfläche, beispielsweise einer Ringnut, am Einzugsnippel 12 gehalten wird (Figur 1).

In der Zeichnung zeigt die Figur 1 die Spanneinrichtung 1 in ihrer Spannstellung, in der der Druckraum 5 drucklos ist und der Kolben 6 durch das Tellerfederpaket 10 nach unten gedrückt wird, so daß eine obere Schrägfläche 18 der Nut 17 die Kugel 16 in Eingriff mit dem Einzugsnippel 12 hält. Wenn jetzt der Druckraum 5 über den Kanal 8 mit Druckmittel beaufschlagt wird, wird der Kolben 6 entgegen der Rückstellkraft des Tellerfederpaketes 10 nach oben in die in Figur 2 dargestellte Lage gedrückt, in der die Nut 17 der Kugel 16 Raum läßt, radial nach außen auszuweichen, so daß der Einzugsnippel 12 aus der Spanneinrichtung 1 herausgenommen beziehungsweise dann wieder in diese eingesetzt werden kann. Wie die Figur 2 gut erkennen läßt, ist der Hub des Kolbens 6 dabei so gewählt, daß der Einzugsnippel 12 durch den Boden der Aufnahme 11 nach oben gedrückt wird, um daß Entfernen des Einzugsnippels 12 zu erleichtern.

Gemäß der Erfindung weist der Kolben 6 an seiner druckraumseitigen Stirnfläche einen Ansatz 19 auf, der in einer im Boden der Zylinderbohrung 4 ausgebildete Ausnehmung 20 verschiebbar geführt und gegenüber dieser abgedichtet ist. Die Ausnehmung 20 bildet zusammen mit einem in dem Ansatz 19 vorgesehenen, die Ausnehmung 20 mit dem Boden der Aufnahme 11 für den Einzugsnippel 12 verbindenden, düsenartig ausgebildeten Kanalabschnitt 21 und mit einem sich von der Gehäuseaußenwandung zur Ausnehmung 20 erstreckenden Kanalabschnitt 22 einen Lufteinblaskanal 23, der an eine nicht dargestellte Druckluftquelle angeschlossen ist. Durch diesen Lufteinblaskanal 23 kann beim Einsetzen eines Einzugsnippels 12 in die Spanneinrichtung 1 oder Herausnehmen des Einzugsnippels 12 Druckluft in die Aufnahme 11 eingeblasen werden, um auf diese Weise die Aufnahme 11 und den Einzugsnippel 12 von Spänen und sonstigen Verunreinigungen insbesondere im Bereich der Paßflächen und des Spannmechanismus zu säubern. Hierdurch können in zuverlässiger Weise verschmutzungsbedingte Beeinträchtigungen der Systemgenauigkeit vermieden werden.

## Patentansprüche

1. Spanneinrichtung zur Fixierung einer mit einem Einzugsnippel (12) versehenen Palette (P) an einer Aufspannplatte, mit einem Gehäuse (2), das eine Auflagefläche (2c) für die Palette (P) bildet und eine zur Auflagefläche (2c) öffnende Aufnahme (11) aufweist, in der der Einzugsnippel (12) positionierbar und mittels eines Spannmechanismus fixierbar ist, wobei zur drehfesten Positionierung der Palette (P) am Gehäuse (2) an der Auflagefläche (2a) wenigstens eine Nut (9a) zur Aufnahme eines an der Palette (P) vorgesehenen Vorsprungs (9b) und/oder wenigstens ein Vorsprung für den Eingriff in eine an der Palette (P) ausgebildete Nut vorgesehen ist, **dadurch gekennzeichnet, daß** die Vorsprünge (9b) in Form von Stiften ausgebildet sind, die in die Palette (P) eingeschraubt sind.

2. Spanneinrichtung nach Anspruch 1, **dadurch gekennzeichnet, daß** an der Auflagefläche (2c) mehrere Nuten (9a) und/oder Vorsprünge entlang eines die Aufnahme (11) umgebenden Teilkreises insbesondere gleichmäßig verteilt angeordnet sind.

3. Spanneinrichtung nach Anspruch 2, **dadurch gekennzeichnet, daß** an der Auflagefläche (2c) vier Nuten (9a) und/oder Vorsprünge vorgesehen und entlang eines Teilkreises um jeweils 90° versetzt angeordnet sind.

4. Spanneinrichtung nach einem der Ansprüche 1 bis 3, **dadurch gekennzeichnet, daß** die Nuten (9a) und/oder Vorsprünge im äußeren Randbereich der Auflagefläche (2c) vorgesehen sind.

5. Spanneinrichtung nach einem der Ansprüche 1 bis 4, **dadurch gekennzeichnet, daß** die Nuten (9a) zu ihrem Boden hin konisch zulaufend ausgebildet sind.

## Claims

1. Clamping device for fixing a pallet (P) provided with a draw-in nipple (12) on a holding-down plate, with a housing (2) which forms a bearing surface (2c) for the pallet (P) and has a seat (11) opening to the bearing surface (2c), in which the draw-in nipple (12) is positionable and fixable by means of a clamping mechanism, wherein at least one groove (9a) to receive a projection (9b) provided on the pallet (P) and/or at least one projection for engagement into a groove formed on the pallet (P) is provided on the bearing surface [(2c)] to fix the rotational position of the pallet (P) on the housing (2), **characterized in that** the projections (9b) are configured as setscrews which are screwed into the pallet (P).

2. Clamping device according to Claim 1, **characterized in that** a plurality of grooves (9a) and/or projections are arranged, in particular uniformly distributed, on a pitch circle surrounding the seat (11).

3. Clamping device according to Claim 2, **characterized in that** four grooves (9a) and/or projections are provided on the bearing surface (2c) and are arranged on a pitch circle at 90° intervals.

4. Clamping device according to any one of Claims 1 to 3, **characterized in that** the grooves (9a) and/or projections are provided in the outer rim region of the bearing surface (2c).

5. Clamping device according to any one of Claims 1 to 4, **characterized in that** the grooves (9a) are formed with a taper towards the bottom of the groove.

## Revendications

1. Dispositif de serrage pour consigner à demeure, sur une plaque de montage, une palette (P) munie d'une cheville emboîtable (12), présentant un boîtier (2) qui forme une surface d'appui (2c) destinée à la palette (P) et est doté d'un logement (11) s'ouvrant vers la surface d'appui (2c), dans lequel la cheville emboîtable (12) peut être positionnée et bloquée au moyen d'un mécanisme de serrage, sachant qu'il est prévu sur la surface d'appui (2_{c}), pour le positionnement de la palette (P) sur le boîtier (2) avec verrouillage rotatif, au moins une rainure (9a) conçue pour recevoir une saillie (9b) prévue sur la palette (P), et/ou au moins une saillie destinée à pénétrer dans une rainure pratiquée sur ladite palette (P), **caractérisé par le fait que** les saillies (9b) sont réalisées sous la forme de tenons vissés dans la palette (P).

2. Dispositif de serrage selon la revendication 1, **caractérisé par le fait que** plusieurs rainures (9a) et/ou saillies sont disposées sur la surface d'appui (2c), notamment avec répartition uniforme le long d'une circonférence partielle ceinturant le logement (11).

3. Dispositif de serrage selon la revendication 2, **caractérisé par le fait que** quatre rainures (9a) et/ou saillies sont prévues sur la surface d'appui (2c), et sont agencées le long d'une circonférence partielle avec décalage respectif de 90°.

4. Dispositif de serrage selon l'une des revendications 1 à 3, **caractérisé par le fait que** les rainures (9a) et/ou les saillies sont prévues dans la région marginale extérieure de la surface d'appui (2c).

5. Dispositif de serrage selon l'une des revendications 1 à 4, **caractérisé par le fait que** les rainures (9a) sont réalisées avec convergence conique en direction de leur fond.
